# EUROPEAN PATENT APPLICATION

(11) **EP 4 266 561 A1**
(43) Date of publication of application: **25.10.2023**
(21) Application number: 22169371.6
(22) Date of filing: 22.04.2022
(51) Int. Cl.: H02K 15/03, H02K 15/02

(54) **ASSEMBLY OF A MULTI-SEGMENT STATOR**

(71) Applicant: Siemens Gamesa Renewable Energy A/S, 7330 Brande (DK); Siemens Gamesa Renewable Energy GmbH & Co. KG, 20097 Hamburg (DE)
(72) Inventor: FuerstSylvester, Marius, 27478 Cuxhaven (DE); Henriksen, Benjamin, 7400 Herning (DK); Schneider, Thorsten, 27478 Cuxhaven (DE); Soerensen, Martin Bach, 7400 Herning (DK)
(74) Representative: SGRE-Association

(57) **Abstract**

It is described a method of positioning a stator segment (101) of a multi-segment stator (110) of an electrical machine, the multi-segment stator (110) comprising a plurality of segments (101) and a shaft (103), the method comprising:
mounting a stator segment (101) on the shaft (103) at a first segment position,
mounting a plurality of actuators (201a, 201b, 202a, 202b) between the segment (101) and the shaft (103) for moving the segment (101) from said first segment position,
detecting positions of a plurality of first reference objects (107a, 107b, 107c) attached to the stator segment (101) using a camera system (105); a plurality of second reference objects (111a, ..., 111f) attached to the shaft (103) using a laser tracking system (109) and a plurality of third reference objects (113a, 113b) attached to the camera system (105) using the laser tracking system (109),
determining a second segment position of the stator segment (101) based on the positions of the pluralities of first reference objects, the second reference objects and the third reference objects and actuating the plurality of actuators (201a, 201b, 202a, 202b) for moving the segment (101) from said first segment position to said second segment position.

## Description

### Field of invention

The invention relates to a method and an arrangement for positioning a stator segment of a multi segment stator of an electrical generator. The invention further relates to a method for assembling a multi-segment stator of an electrical generator. Particularly, but not exclusively, the invention can be applied to an electrical generator for a wind turbine.

### Art Background

Building an electrical machine, such as a generator or a motor, requires assembling a stator and further to assembly a rotor and put the stator and rotor together. Since nowadays the electrical machines become larger and larger, the stator is conventionally assembled from multiple stator segments. The multiple stator segments need to be properly assembled. Assembling the multiple stator segment requires to properly adjust or align or arrange those stator segments regarding position and/or orientation. Further, the airgap, which is formed between the stator and a rotor in an electrical machine is an important design feature that contributes to determines the overall efficiency of the wind turbine. The tighter the airgap is and the less it fluctuates over the lateral surfaces at the axial ends of the stator and the rotor, the more energy can be generated and the higher the efficiency is. Fluctuations of the airgap may be influenced by the eccentricity of the coupling between the stator and the rotor of the electric machine. The overall eccentricity is influenced in the stator by the shape of the stator about its central axis. The shape of the stator is influenced by the positioning of the stator segments on a stator shaft.

It is therefore desirable to provide a method and an arrangement for positioning the stator segments of a multi segment stator of an electrical generator. It is further desirable to provide a method for assembling the stator, which minimizes the fluctuations of the airgap by controlling the external shape of the stator.

### Summary of the Invention

This need may be met by the subject matter according to the independent claims. Advantageous embodiments of the present invention are described by the dependent claims.

According to a first aspect of the present invention, it is provided a method of positioning a stator segment of a multi segment stator of an electrical machine, the multi segment stator comprising a plurality of segments and a shaft, the method comprising:
mounting a stator segment on the shaft at a first segment position,
mounting a plurality of actuators between the segment and the shaft for moving the segment from said first segment position,
detecting positions of a plurality of first reference objects attached to the stator segment using a camera system,
detecting positions of a plurality of second reference objects attached to the shaft using a laser tracking system,
detecting positions of a plurality of third reference objects attached to the camera system using the laser tracking system, and
determining a second segment position of the stator segment based on the positions of the pluralities of first reference objects, the second reference objects and the third reference objects,
actuating the plurality of actuators for moving the segment from said first segment position to said second segment position.

The method may partly be implemented in software and/or hardware.

According to a second aspect of the present invention, it is provided an arrangement for positioning a stator segment of a multi segment. The arrangement comprises:
a camera system configured to detect positions of a plurality of first reference objects attached to the stator segment,
a laser tracking system configured:
   to detect positions of a plurality of second reference objects attached to the shaft,
   to detect positions of a plurality of third reference objects attached to the camera system, and
a processor configured to determine a second segment position of the stator segment based on the positions of the plurality of first, second and third reference objects,
a plurality of actuators to be mounted between the segment and the shaft for moving the segment relatively to the shaft.

The multi segment stator may essentially have a cylindrical shape. The electrical machine may be an electrical generator or an electrical motor. In particular, the electrical machine may be an electrical generator of a wind turbine.

The stator segment may comprise ferromagnetic material, in particular soft ferromagnetic material, having a high permeability. The completed stator may further comprise one or multiple (for example three-phase) winding sets which are wound around teeth or through slots comprised in each of the stator segments. The shaft may also have a cylindrical shape and may comprise a centre axis, in particular symmetry axis. Each stator segment is to be assembled with a shaft and then, after successful positioning, be mounted thereon.

The first reference objects, the second reference objects and the third reference objects may be objects which are easily visible by imaging those using one or more cameras of the camera system. The reference objects may be active reference objects such as light sources or may be inactive reference objects, such as particular reflectors, such as cateye reflectors. The reference objects may have a relatively small (lateral) extension or size, such as for example between 0.5 mm and 10 mm and may have even smaller thickness such as between 0.01 mm and 1 mm. All reference objects may be attached to the respective stator segment or shaft or camera system at predetermined positions. By detecting the position of the reference objects, the position and orientation of the entire object to which they are respectively attached, i.e. the stator segment, the shaft and the camera system, may be derivable and derived by the method.

For example, the first reference objects may all be attached to a radial outer surface of the respective stator segment, in particular including a first reference object at each corner (or edge) of the stator segment. The second reference objects may be attached at a radial outer surface of the shaft, in particular including at least some second reference objects which are arranged in a same plane perpendicular to the axis of the shaft. The third reference objects may be attached to (a frame or casing of or one or more cameras of) the camera system also at predetermined positions.

The laser tracking system may comprise a laser source for generating a laser beam, a goniometer for directing the laser beam in a particular direction and for measuring direction angles, in particular two angles (for example of a spherical coordinate system). The laser tracking system may further comprise a distance measurement capability using the laser beam and an interferometer e.g. Thereby, the laser tracking system is enabled to determine a three-dimensional position of each of the third reference objects and each of the second reference objects. The camera system does not need to acquire image data from the shaft. Position and/or orientation of the shaft may only be detected using the laser tracking system. Since the laser tracking system also detects the positions of the plurality of third reference objects attached to the camera system, a positional and orientational relationship between the position and orientation of the camera system and the position and orientation of the shaft can be established. As a consequence, also a relative arrangement of the stator segment relative to the shaft can be established or derived by the method. Thereby, it may be determined whether the stator segment is positioned and oriented in a desired or target position and orientation, in particular relative to the shaft. Thereby, the second segment position, i.e. the position to which the stator segment is to be rearranged (to result in the target position and/or orientation), may easily be determined. Furthermore, the accuracy may be improved, since the laser tracking system is enabled with high accuracy to determine position of an object relatively far away, while the camera system may provide positional data with lower and lower accuracy for farer and farer apart objects. Thus, using the camera system, the position of the shaft would not have been determined in such high accuracy compared to using the laser tracking system.

The present invention provides a method and arrangement for performing measurements of a segment. The measurements are used as information to position the segment. After the segment has been positioned, the positioned segment may be remeasured and further moved, up to when an optimal position is reached.

According to embodiments the present invention, the method may further comprise:
comparing said second segment position with a predefined optimal segment position and defining at least one comparison parameter associated with at least a difference between the second segment position and the optimal segment position, and
if the comparison parameter is inside an acceptable interval, then blocking the stator segment in the second segment position and removing the plurality of actuators.

According to further embodiments the present invention, if the comparison parameter is outside an acceptable interval, the method may further comprise repeating the step of:
detecting positions of the pluralities of first reference objects, second reference objects and third reference objects,
determining a third segment position of the stator segment based on the positions of the pluralities of first reference objects, the second reference objects and the third reference objects,
actuating the plurality of actuators for moving the segment from said second segment position to said third segment position.

According to embodiments the present invention, the steps of the method of the present invention are executed iteratively and automatically up to when the optimal segment position has been reached. The method may be implemented in a controller, for example in the processor of the arrangement according to the present invention. The controller may be connected to the plurality of actuators for moving the segment up to the predefined optimal segment position. According to embodiments the present invention, the controller or processor is configured to permit the intervention of an operator. The operator may for example command the start of the method and/or may confirm the end of the procedure, after checking that the optimal segment position has been reached. The operator may further intervene to stop the execution of the method.

According to embodiments the present invention, at least two actuators are provided at each axial end and /or at each circumferential end of the stator segment.

According to an embodiment of the present invention, four actuators may be provided at the four corners of the stator segment.

It should be understood that features, individually or in any combination, disclosed, described, explained or provided for a method for positioning a stator segment of a multi segment stator of an electrical machine are also, individually or in any combination, applicable to an arrangement for positioning a stator segment according to embodiments of the present invention and vice versa.

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates an arrangement for positioning a stator segment of a multi-segment stator of an electrical machine performing a method according to an embodiment of the present invention in an elevational view,
Fig. 2 schematically illustrates the arrangement of figure 1 in a perspective view,
Fig. 3 schematically illustrates steps of a method according to an embodiment of the present invention.

### Detailed Description

The illustrations in the drawings are schematic. It is noted that in different figures, similar or identical elements are provided with the same reference signs.

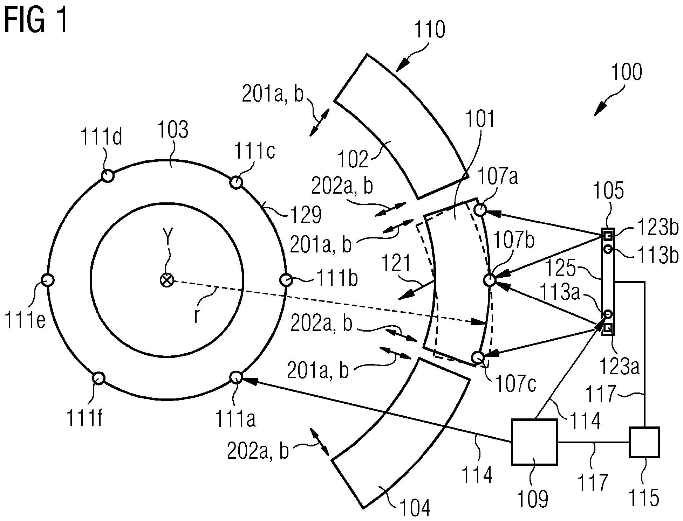

**Figure 1** illustrates an arrangement 100 for positioning a stator segment 101 of a multi segment stator 110 of an electrical machine. The multi-segment stator 110 comprises a plurality of segments 101 and a shaft 103. The arrangement 100 comprises a camera system 105 which is configured to detect positions of a plurality of first reference objects 107a, 107b, 107c attached to the stator segment 101. The arrangement 100 further comprises a laser tracking system 109 which is configured to detect positions of a plurality of second reference objects 111a, ..., 111f attached to the shaft 103. The laser tracking system 109 is further configured to detect positions of a plurality of third reference objects 113a, 113b attached to the camera system 105. Thereby a laser beam 114 is generated and emitted in a particular direction involving distance and angle measurement.

The arrangement 100 further comprises a processor 115 which receives via control and signal lines 117 data from the camera system 105 as well as from the laser tracking system 109 and is configured to determine the position and/or in orientation of the stator segment 101 based on the positions of respective pluralities of first 107a, 107b, 107c, second 111a, ..., 111f and the third 113a, 113b reference objects.

In Fig. 1 the arrangement 100 including the stator segment 101 to be presently assembled as well as other stator segments 102, 104, later to be assembled and including the shaft 103 is depicted in an elevational view along an axis Y of the shaft 103 which will coincide with a rotor axis of a completed generator. Each stator segment 101, 102, 103 is mounted on the shaft 103 at a first segment position, respectively. For each stator segment 101, 102, 103 a plurality of actuators (two actuators 201a, 202a are shown in Fig. 1, at two respective circumferential ends of each stator segment 101, 102, 103) are mounted between the segment 101, 102, 103 and the shaft 103 for moving the segment 101 from said first segment position. The plurality of actuators is to be used for moving the segment 101 towards a second segment position, as better clarified in the following. The plurality of actuators may be commanded through the processor 115 or another controller associated to the arrangement 100.

After the tracking system 109 has determined the position of the second reference objects 111a, 111b, ..., 111f, the position of the axis 109 of the shaft is determined based on the position of the plurality of second reference objects 111a, ..., 111f. A second segment position, exemplary depicted with a dashed line, is then determined based on the position and orientation of the axis Y of the shaft 103. After having performed the measurements, the stator segment 101 is shifted or moved in accordance with the translation arrow 121 (represents the resultant of the combined action of the actuators attached to the stator segment 101).

In the embodiment illustrated in Fig. 1, the camera system 105 includes two cameras 123a, 123b on one horizontal plane and (not illustrated) two other cameras in another horizontal plane arranged in a fixed relative position in a frame 125 or supported by a frame 125 (e.g. manufactured from warp resistant carbon). The in total four cameras including the two cameras 123a, 123b have slightly different viewing angles and image each or the first reference objects 107a, 107b, 107c. A 3D construction may then reconstruct a volume portion comprising the first reference objects 107a, 107b, 107c based on 2D image data acquired by the two (or more) different cameras 123a, 123b. In other embodiments, more than two cameras may be provided to increase the accuracy or position determination even more.

As can be appreciated from Fig. 1, the first reference objects 107a, 107b, 107c are arranged at a radial outer surface 127 of the stator segment 101 and are also arranged in the drawing plane which coincides with a plane perpendicular to the axis Y of the shaft. The second reference object 111a, ..., 111f are arranged at an outer radial surface 129 of the shaft 103 and are also arranged in a same plane perpendicular to the axis Y of the shaft 103.

According to an embodiment of the present invention, the stator segment 101 will be assembled with the shaft 103 such that the radius r, i.e. the distance between the axis Y of the shaft 103 and the outer surface 127 of the stator segment is smaller than a minimal radius of a rotor to be assembled with the completed stator.

As can be taken from Fig. 1, the stator segment spans an angle region of 30° about the axis Y of the shaft 103. In other embodiments, the stator segment may span another angle range. As can be taken from Fig. 1, the shaft 103 has a cylindrical shape and in particular extends in the shape as depicted in Fig. 1 also along the axial direction (direction of the axis Y). After having adjusted the proper position of the stator segment 101, the assembly consisting of the shaft and the mounted stator segment may be rotated (clockwise or anticlockwise) and the next stator segment (i.e. the stator segment 102 or 104) may be properly aligned or readjusted before mounting also this stator segment to the shaft 103. The stator segments may be mounted using bolts or frames or bars or the like.

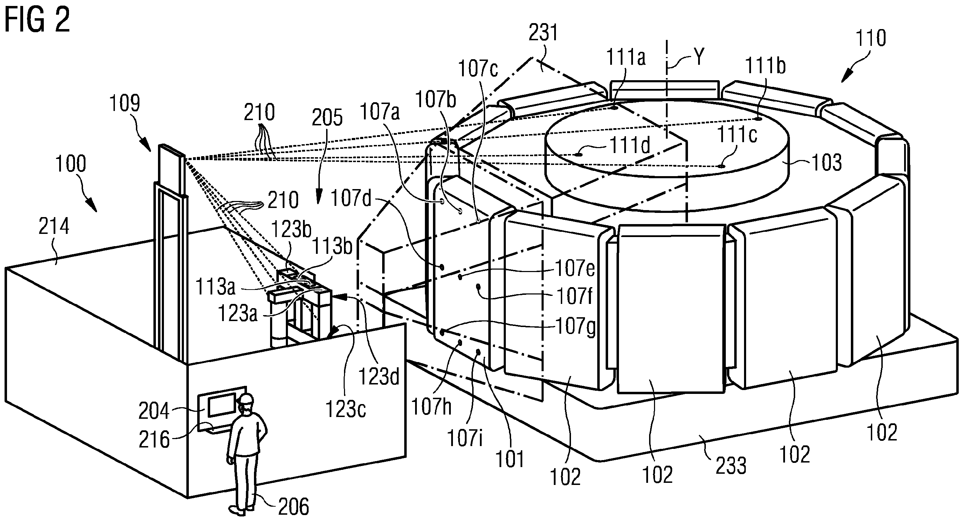

**Figure 2** schematically illustrates the arrangement 100 in a perspective view. The shaft 103 has attached four second reference objects 111a, 111b, 111c, 111d instead of six as are shown in Fig. 1. The laser tracking system 109 detects the positions of all these four second reference objects 111a, ..., 111d. Furthermore, the tracking system 109 also detects the position of third reference objects 113a, 113b, 113c, 113d of a camera system 105. Each camera 123a, 123b, 123c, 123d of the camera system 105 covers at least a viewing range 231 including six first reference objects 107a, ..., 107i at the stator segment 101. These reference objects 107a, ..., 107i are grouped in three groups of reference objects each group including first reference objects arranged in one plane perpendicular to the axis Y of the shaft 203.

The arrangement 100 is enclosed in a fence 214 also including the processor and a viewing screen 204 which can be watched by an operator 206. Further, an input module 216 is provided for allowing the operator 206 to start or stop the measurement process.

The arrangement may include a robot used to calibrate the four cameras. For this purpose, a ruler is placed into the measurement volume or viewing area and is imaged by all cameras. Further, an artefact having reference objects placed as on the stator segment may be imaged in order to know the positions of the photogrammetry. Using the artefact images the data from the laser tracker and the data from the camera system may be mapped (linked) to each other.

The arrangement 100 further comprises a rotation stage 233 onto which the stator segments 101, 102 and the shaft 103 are placed. The rotation stage 233 is rotatable to allow to bring successively the different stator segments to be assembled with the shaft 103 into the viewing range 231 of the camera system 105. When all stator segment 101, 102 are mounted to the shaft 103 a stator 110 is formed.

According to an embodiment of the present invention, the measurement system 100 may return live feedback to an automatic adjustment/manipulator system. An overall control (for example hardware and/or software) may handle all data coming from the measurement and manipulator systems. The measurement system may consist of two different measurement tools, namely a laser tracking system for basic alignment between the fixed shaft and two scanners (e.g. cameras), that can detect the surface of the stator segment. The system (for example arrangement for determining the readjustment value) may be able to take into account variations to values from many different parameters (for example rotor house data, stator plate data, magnetic pull, airbag target or final generator) so that the most optimal position of the segment may be achieved.

The output values of the measurement system (for example stator size, position of each corner of each segment) may be stored (e.g. in electronic storage accessible to processor 115, see Fig. 1) with data from the incoming part (for example rotor house, fixed shaft and stator plate) and other important process data (for example data, time, production order ID, temperature of segments, magnet pool) so that some input variables (for example magnetic pull) may change when combining the data with the final air gap of the finished generator.

The measurement hardware, such as the camera system 105 and the laser tracking system 109, may have a fixed position on the ground and the stator which is to be measured may be rotated stepwise so that the system may measure and align only one stator segment at a time.

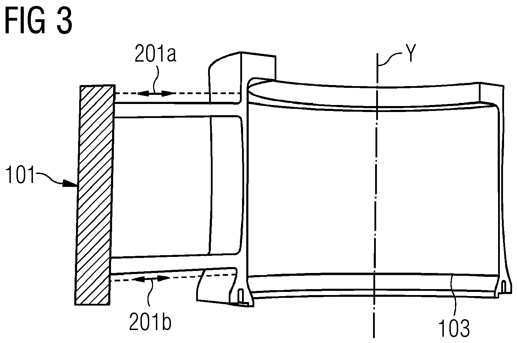

**Figures 3** shows embodiments of the positioning of the plurality of the actuators 201a, 201b, 202a, 202b between the stator segment 101 and the shaft 103. As shown in figure 3, two actuators 201a, 201b may be provided at each axial end of the stator segment 101. As shown in figure 1, two actuators 201a, 202a are provided at two respective circumferential ends of one axial end of the stator segment 101, and two other actuators 201b, 202b are provided at two respective circumferential ends of the other axial end of the stator segment 101. The four actuators 201a, 201b, 202a, 202b positioned at the corners of the segment 101 may be conveniently used for moving the segment 101 from the first segment position to the second segment position or to further other positions. According to other embodiments of the invention, a different number of actuators may be used. According to other embodiments of the invention, the actuators may be positioned at a distance from the corner of the segment.

According to the method of the present inventions, after the second segment position of the stator segment 101 based on the positions of the pluralities of first reference objects 107a, 107b, 107c, the second reference objects 111a, ..., 111f and the third reference objects 113a, 113b. The plurality of actuators 201a, 201b, 202a, 202b are activated for moving the segment 101 from the first segment position to the second segment position. In a further step of the method, the second segment position is compared with a predefined optimal segment position and at least one comparison parameter is defined, which associated with at least a difference between the second segment position and the optimal segment position. The comparison parameter may be, for example, a distance or a plurality of distances between the second segment position and the optimal segment position. If the comparison parameter is inside an acceptable interval, for example below a predefined threshold, then the stator segment 101 is blocked in the second segment position and the plurality of actuators 201a, 201b, 202a, 202b are removed. If, otherwise, the comparison parameter is outside an acceptable interval, for example above a predefined threshold, then the step of the method described above are repeated, i.e.:
the pluralities of first reference objects 107a, 107b, 107c, second reference objects 111a, ..., 111f and third reference objects 113a, 113b are determined again,
a third segment position of the stator segment 101 is determined based on the new positions of the pluralities of first reference objects, the second reference objects and the third reference objects,
the plurality of actuators 201a, 201b, 202a, 202b are activated for moving the segment 101 from said second segment position to said third segment position and the comparison parameter is calculated again.

## Claims

1. Method of positioning a stator segment (101) of a multi segment stator (110) of an electrical machine, the multi segment stator (110) comprising a plurality of segments (101) and a shaft (103), the method comprising:
mounting a stator segment (101) on the shaft (103) at a first segment position,
mounting a plurality of actuators (201a, 201b, 202a, 202b) between the segment (101) and the shaft (103) for moving the segment (101) from said first segment position,
detecting positions of a plurality of first reference objects (107a, 107b, 107c) attached to the stator segment (101) using a camera system (105),
detecting positions of a plurality of second reference objects (111a, ..., 111f) attached to the shaft (103) using a laser tracking system (109),
detecting positions of a plurality of third reference objects (113a, 113b) attached to the camera system (105) using the laser tracking system (109); and
determining a second segment position of the stator segment (101) based on the positions of the pluralities of first reference objects (107a, 107b, 107c), the second reference objects (111a, ..., 111f) and the third reference objects (113a, 113b),
actuating the plurality of actuators (201a, 201b, 202a, 202b) for moving the segment (101) from said first segment position to said second segment position.

2. Method according to claim 1, further comprising:
comparing said second segment position with a predefined optimal segment position and defining at least one comparison parameter associated with at least a difference between the second segment position and the optimal segment position, and
if the comparison parameter is inside an acceptable interval, then blocking the stator segment (101) in the second segment position and removing the plurality of actuators (201a, 201b, 202a, 202b).

3. Method according to claim 1, further comprising:
comparing said second segment position with a predefined optimal segment position and defining at least one comparison parameter associated with at least a difference between the second segment position and the optimal segment position, and
if the comparison parameter is outside an acceptable interval, then repeating the step of:
detecting positions of the pluralities of first reference objects (107a, 107b, 107c), second reference objects (111a, ..., 111f) and third reference objects (113a, 113b),
determining a third segment position of the stator segment (101) based on the positions of the pluralities of first reference objects, the second reference objects and the third reference objects,
actuating the plurality of actuators (201a, 201b, 202a, 202b) for moving the segment (101) from said second segment position to said third segment position.

4. Method according to any of the preceding claims, further comprising:
determining position and orientation of an axis (110) of the shaft (103) based on the positions of the plurality of second reference objects (111a, ..., 111f),
wherein determining the second segment position is further based on the determined position and orientation of the axis (Y) of the shaft (103).

5. Method according to any of the preceding claims,
wherein the camera system (105) comprises at least two or three or four cameras or more cameras (123a, 123b) each acquiring 2D image data from the stator segment (103) from different viewing areas and/or angles,
wherein detecting the positions of the plurality of first reference objects (107a, 107b, 107c) comprises 3D reconstruction of a volume portion comprising the first reference objects (107a, 107b, 107c) based on the 2D image data of each of the at least two cameras (123a, 123b).

6. Method according to any of the preceding claims,
wherein the plurality of first reference objects (107a, 107b, 107c) include at least 9, in particular between 9 and 100, or more first reference objects, which are in particular attached to a radial outer surface (127) of the stator segment (101), and/or
wherein the plurality of second reference objects (111a, ..., 111f) include at least 3, in particular between 3 and 6, or more, second reference objects, from which at least 3 are arranged in a same plane perpendicular to the axis (Y) of the shaft (103), and/or
wherein the plurality of third reference objects (113a, 113b) include, in particular for each camera of the camera system, at least 4, or more, third reference objects,
wherein the first and/or second and/or third reference objects in particular include light reflectors attached using adhesive.

7. Method according to any of the preceding claims, wherein the laser tracking system (109) is configured to detect the positions of the plurality of second reference objects (111a, ..., 111f) and the third reference objects (113a, 113b) by detecting two angle values and a distance value of each of the second and the third reference objects.

8. Method according to any of the preceding claims, wherein the camera system (109) and/or the laser tracking system (105) is configured to acquire measurement data at a rate of between 1 Hz and 10 Hz or more.

9. Method according to any of the preceding claims, wherein determining the second segment position in position and/or in orientation of the stator segment is further based:
on a target geometry of the stator, and/or
on a target position and orientation of the stator segment relative to the shaft.

10. Method according to any of the preceding claims, wherein the target geometry of the stator (212) and/or on a target position and orientation of the stator segment (201) relative to the shaft (203) is derived from geometry data of a rotor, in particular outer rotor, of the electrical machine, the rotor to be assembled with the completed stator.

11. Method of assembling a multi-segment stator (212) of an electrical machine, the method comprising:
performing a method according to any of the preceding claims for all stator segments (201, 202), and
assembling the multi segment stator (212) with a rotor, in particular an outer rotor, in particular including a plurality of mounted permanent magnets.

12. Arrangement (100) for positioning a stator segment (101) of a multi segment stator (100) of an electrical machine, the multi segment stator (100) comprising a plurality of segments (101) and a shaft (103), the arrangement (100) comprising:
a camera system (105) configured to detect positions of a plurality of first reference objects (107a, 107b, 107c) attached to the stator segment (101),
a laser tracking system (109) configured:
to detect positions of a plurality of second reference objects (111a, ..., 111f) attached to the shaft (103),
to detect positions of a plurality of third reference objects (113a, 113b) attached to the camera system (105), and
a processor (115) configured to determine a second segment position of the stator segment (101) based on the positions of the plurality of first, second and third reference objects,
a plurality of actuators (201a, 201b, 202a, 202b) to be mounted between the segment (101) and the shaft (103) for moving the segment (101) relatively to the shaft (103).

13. Arrangement (100) according to claim 12, wherein the processor (115) is connected to the plurality of actuators (201a, 201b, 202a, 202b), the processor (115) being configured for moving the segment to a predefined optimal segment position.

14. Arrangement (100) according to claim 12, wherein at least two actuators (201a, 202a) are provided at each circumferential end of the stator segment (101).

15. Arrangement (100) according to claim 12 or 13, wherein at least two actuators (201a, 201b) are provided at each axial end of the stator segment (101).
